# EUROPEAN PATENT SPECIFICATION

(11) **EP 4 454 986 B1**
(45) Date of publication and mention of the grant of the patent: **27.08.2025**
(21) Application number: 23169463.9
(22) Date of filing: 24.04.2023
(51) Int. Cl.: B62M 6/55, B62M 6/50, B62J 11/19, B62K 19/34, B62M 9/00, B62J 45/40

(54) **DRIVE DEVICE, CENTRE DRIVE OR BOTTOM BRACKET DRIVE COMPRISING SUCH A DRIVE DEVICE AND BICYCLE**
ANTRIEBSVORRICHTUNG, MITTENANTRIEB ODER TRETLAGERANTRIEB MIT EINER SOLCHEN ANTRIEBSVORRICHTUNG UND FAHRRAD
DISPOSITIF D'ENTRAÎNEMENT, ENTRAÎNEMENT CENTRAL OU ENTRAÎNEMENT DE PÉDALIER COMPRENANT UN TEL DISPOSITIF D'ENTRAÎNEMENT ET BICYCLETTE

(43) Date of publication of application: 30.10.2024
(73) Proprietor: MAHLE International GmbH, 70376 Stuttgart (DE)
(72) Inventor: Ventura Rodriguez, Carlos, 39011 Santander (ES)
(74) Representative: BRP Renaud & Partner mbB Rechtsanwälte Patentanwälte Steuerberater

(56) References cited:
- EP-A1- 3 647 175
- EP-A1- 4 089 851
- CN-U- 202 574 548
- CN-U- 211 943 642
- DE-A1- 102018 120 095
- US-B2- 10 036 465
- US-B2- 9 834 278

## Description

The invention relates to a drive device for a bicycle, in particular an E-bike or a Pedelec, according to the subject of Claim 1. The invention relates in particular to a centre drive or bottom bracket drive comprising a drive device and further in particular to a bicycle, in particular an E-bike or a Pedelec, comprising such a centre drive or bottom bracket drive.

Known drive devices provide via an output shaft a torque for driving the bicycle. They are relatively large constructions which, in particular for aesthetic reasons, is undesirable. Furthermore, large drive devices are generally relatively heavy which, with regard to performance that is important in bicycles (for example sportive driving characteristics) is likewise undesirable.

Us 9 834 278 B2 discloses a drive device for a bicycle according to the preamble of claim 1. Other drive devices are known from CN 211 943 642 U and DE 10 2018 120095 A1.

The object of the invention therefore lies in providing an improved or at least another embodiment of a drive device. In particular, a comparatively compact drive device, an advantageous drive for a bicycle and an advantageous bicycle are to be stated.

According to the invention, this object is achieved through the subject-matter of independent claim 1. Preferred embodiments of the invention are provided in the dependent claims.

The invention has recognised in particular that a relatively compact drive device can be provided in that a plug connector previously projecting away, finger-like, from a housing of the drive device is replaced with an angular plug connector. The invention, furthermore, has recognised that by a practical configuration of attachment features of the drive device utilised for fixing the drive device to a frame of the bicycle a comparatively compact drive device can be realised.

Accordingly, a drive device for a bicycle, in particular an E-bike or a Pedelec, is provided, which comprises a multi-part housing accommodating a drive unit of the drive device, said housing comprises a first monolithic housing part having a first opening and a second monolithic housing part having a second opening which is fixed to the first housing part for example by a screw connection, wherein the second opening is aligned in the axial direction of an axis of rotation of a drive shaft of the drive unit with the first opening. Furthermore, it is provided that the drive shaft penetrates the first opening and the second opening forming shaft axial ends protruding over the first housing part and second housing part for arranging pedals of the drive unit. Furthermore, the drive unit comprises an output shaft which penetrates the first opening forming an axial protrusion protruding over the first housing part and enclosing the drive shaft coaxially with respect to the axis of rotation for arranging an attachment part referred to as spider in practice, on which for example a chain ring for a drive chain can be mounted. The first housing part has first attachment features for fixing the drive device to a frame of the bicycle. Furthermore, the second housing part has second attachment features for fixing the drive device to the frame of the bicycle. It is substantial that the drive device comprises a circuit board arranged in the housing and equipped with electronic components, in particular a so-called PCB (printed circuit board), which has a connection interface penetrating the first housing part, which has at least one angular plug connector protruding over the first housing part for connecting a mating plug connector of a sensor line of the bicycle.

Because of the angular plug connector, the proposed drive device is a relatively compact construction in particular in the axial direction of the axis of rotation. Apart from this, the drive device makes possible using a cost-effective sensor line with a mating plug connector of straight configuration, for example a flat mating plug connector having a diameter of less than 10 mm, since the angulation is realised by the plug connector.

The sensor line can be communicatingly connected to a sensor arranged on the bicycle, for example a speed sensor. For this purpose, the sensor line can be installed on or within a frame of the bicycle.

It is practical when the angular plug connector comprises a connector base parallel with respect to the axis of rotation engaging with the connection interface and a connector extension following thereon. The connector extension can be embodied angled with respect to the connector base so that between the connector extension and the axis of rotation an angle is defined. The said angle can amount to for example substantially 90° or 90°. Thus, when the sensor line is installed on or within a frame of the bicycle and routed to the drive device more or less at right angles to the axis of rotation, not only a relatively compact drive device is realised but a favourable mountability of the mating plug connector of the sensor line on the angular plug connector can be accomplished as well. It is practical when the angular plug connector forms a 90° angular plug connector.

It is practical, further, when the angular plug connector comprises contact pins and the mating plug connector of the sensor line contact jacks into which the contact pins of the mating plug connector can be plugged. Alternatively it is also conceivable that the mating plug connector of the sensor line comprises contact pins and the angled plug connector contact jacks into which the contact pins of the mating plug connector can be plugged. By way of this, a preferred configuration for the plug and mating plug connector is stated.

It is practical, further, when the first attachment features are realised by threaded blind hole bores and/or threaded through-bores extending into the first housing part. The first attachment features thus do not protrude over the housing or the first housing part but are quasi-recessed or integrated in the first housing part. Because of this, the proposed drive device can be a relatively compact construction in the axial direction of the axis of rotation.

It is practical when the second attachment features are realised by threadless through-bores which extend completely through shoulder projections of the second housing part, and insert sleeves with internal thread, which are each inserted into a through-bore. Because of this, the second attachment features do not protrude over the housing or the second housing part but are quasi-recessed or integrated in the shoulder projections of the second housing part. Because of this, the proposed drive device can be an even more compact construction in the axial direction of the axis of rotation than before.

The insert sleeves can each have a hollow circular ring-cylindrical main body. On a main body axial end of such a main body, a support collar protruding over an outer lateral surface of the main body encircling the main body in portions can be provided, by way of which the insert sleeve, when inserted into a through-bore arranged on the second housing part, touchingly supports itself on the second housing part.

In order to be able to produce the said insert sleeves to be light in weight and at the same time in large quantities it can be provided that the insert sleeves are produced from an aluminium material.

By way of the first and second attachment features the proposed drive device can be attached to a frame of the bicycle so that even relatively large torque loads of for example greater than 45 Nm applied via each pedal can be transferred via the housing of the drive device to the frame.

It is practical, further, when the first housing part comprises third attachment features for fixing a chain guide of the drive device for guiding a chain of the drive device engaging with the attachment part, wherein the first attachment features are realised by threaded bores extending into the first housing part, in particular further threaded blind hole bores and/or threaded through-bores. By way of the third attachment features the chain guide can then be fixed to the housing.

According to a further basic idea of the invention, a centre drive or a bottom bracket drive for a bicycle is provided, which is arranged on the frame of a bicycle, in particular an E-bike or a Pedelec, in the region of the pedals of the bicycle and comprises a drive device according to the preceding description. Because of this, a centre drive or bottom bracket drive is provided, which is relatively compact because of the advantageous drive device that can be provided.

The drive device, when it is integrated in the centre drive or the bottom bracket drive, can be employed as pedalling support for the bicycle or as drive for the bicycle.

According to a further basic idea of the invention, a bicycle, in particular an E-bike or a Pedelec, is provided which comprises a centre drive or bottom bracket drive according to the preceding description. Because of this, a bicycle having a centre drive or bottom bracket drive is provided which, because of the drive device employed, is a relatively compact construction.

In summary it should be noted: the present invention relates to a drive device for a bicycle which comprises a multi-part housing accommodating a drive unit of the drive device having a first housing part and a second housing part fixed thereon. It is substantial for the invention that the drive device comprises a circuit board equipped with electronic components arranged in the housing, in particular a so-called PCB (printed circuit board), which has a connection interface penetrating the first housing part which has at least one angular plug connector protruding over the first housing part for connecting a mating plug connector of a sensor line. The invention relates in particular to a centre drive or a bottom bracket drive having such a drive device and further in particular to a bicycle comprising such a centre drive or bottom bracket drive.

Further important features and advantages of the invention are obtained from the subclaims, from the drawings and from the associated figure description by way of the drawings.

A preferred embodiment of the invention is shown in the drawings and explained in more detail in the following description, wherein same reference numbers relate to same or similar or functionally same components.

It shows, in each case schematically
- Fig. 1: a perspective view of a preferred embodiment of a drive device for a bicycle,
- Fig. 2: the drive device from Fig. 1 in viewing direction of an arrow II drawn in there,
- Fig. 3: the drive device from Fig. 1 in viewing direction of an arrow III drawn in there, however without attachment part,
- Fig. 4: an extract of the drive device from Fig. 3 looking in the direction of an arrow IV of a connection interface of the drive device drawn in there and finally
- Fig. 5: a perspective sectional view of the drive device from Fig. 2 along a section line A-A drawn in there.

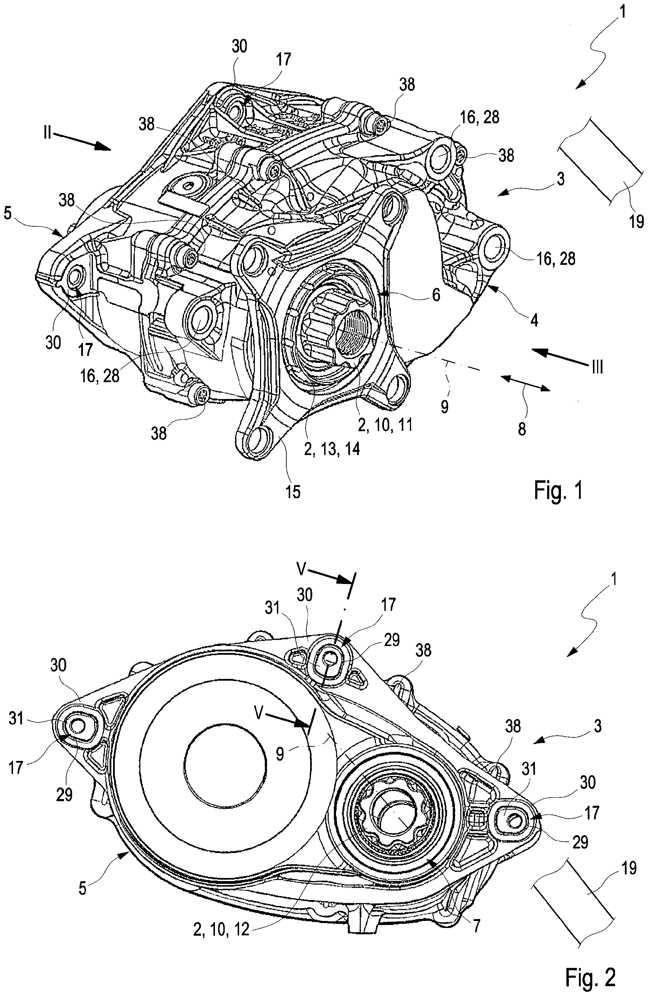

Fig. 1 to 5 show a preferred embodiment of a drive device marked in its entirety with the reference number 1 for a bicycle which is not illustrated, for example an E-bike or a Pedelec.

The shown drive device 1 has a multi-part housing 3 practically produced from a light metal or plastic or a plastic composite material having a first monolithic substantially tub-shaped housing part 4 and a second monolithic substantially tub-shaped housing part 5 which, here, are fixed to one another at their open housing sides by way of an encircling flange screw connection 38. Furthermore, the drive device 1 has a drive unit 2 substantially accommodated completely in the interior of the housing 3 which drives the bicycle, when it is embodied as E-bike, without additional pedalling support, or which, when it is embodied as Pedelec, supports as pedalling support a user of the bicycle while driving the bicycle.

The drive unit 2 comprises a drive shaft designated 10, which penetrates a first opening 6 of the first housing part 4 and a second opening 7 of the second housing part 5, which in the axial direction 8 of an axis of rotation 9 of the drive shaft 10, here drawn in with dash-dotted line, are aligned with one another, in each case forming a shaft axial end 11, 12 protruding over the first housing part 4 or over the second housing part 5. The latter are equipped for arranging pedals of the drive unit 2 which are not illustrated here, so that the user can comfortably pedal and introduce at the drive shaft 10 a pedal torque for driving the bicycle. The drive unit 2 of the drive device 1 additionally has an output shaft 13, in particular a hollow output shaft which, here, penetrates the first opening 6 forming an axial protrusion 14 enclosing with respect to the axis of rotation 9 the drive shaft 10 coaxially. In Fig. 1 it is evident that an attachment part 15 referred to as spider in practice is fixed to the axial protrusion 14 of the output shaft 13. For example, a chain ring which is not shown here for a drive chain of the drive device 1 which is likewise not illustrated can be mounted on the attachment part 15. Furthermore, the drive unit 2 has an electric drive motor which is not shown which is fed by a battery of the bicycle, which drive motor provides a motor torque and a transmission which is likewise not shown. The latter, when the bicycle is embodied as E-bike, is equipped in order to convert the motor torque of the drive motor into a drive torque providing the same to the output shaft 13. When, alternatively, the bicycle is embodied as Pedelec, the transmission is equipped to convert the pedal torque provided by the user and the motor torque of the drive motor, which is provided by the drive motor for example according to a specified support stage at different levels, into a drive torque and provide the same at the output shaft 13.

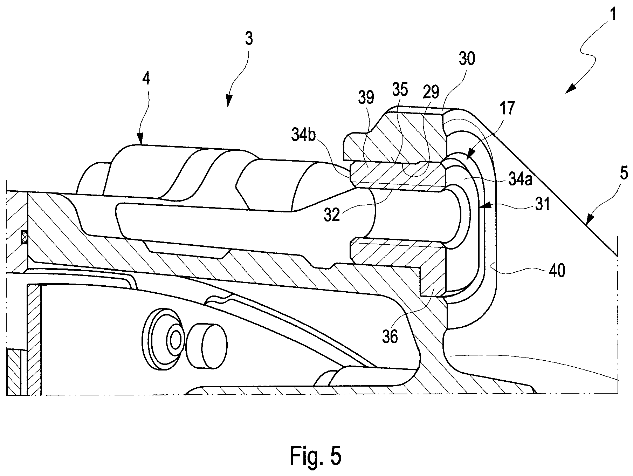

In the figures it is evident, furthermore, that the housing 3 on the first housing part 4 comprises first attachment features 16 for fixing the drive device 1 to a frame 19 of the bicycle which is indicated only symbolically and on the second housing part 5 second attachment features 17 distinct with respect to the first attachment features 16 for fixing the drive device 1 to the frame 19. The first attachment features 16 are exemplarily realised by threaded blind hole bores and/or threaded through-bores 28 extending into the first housing part 4. Because of this, the first attachment features 16 do not protrude over the housing 3 or the first housing part 4 but are completely integrated in the first housing part 3. The second attachment features 17, in contrast with the first attachment features 16, are in multiple parts. They have thread-free through-bores 29 which extend completely through shoulder projections 30 of the second housing part 4 protruding over the second housing part 5 transversely to the axis of rotation 9 of the second housing part 5, and separate insert sleeves 31 with internal thread 32. The insert sleeves 31 can be produced for example from an aluminium material and, in the inserted state, are each completely inserted or pressed into such a through-bore 29 that a respective insert sleeve 31 does not protrude over the second housing part 5 but ends flush with its housing part surface 40. In Fig. 5 it is noticeable that the insert sleeves 31, here, have a hollow circular ring-cylindrical main body 39 each, which has two opposite main body axial ends 34a, 34b, wherein on the one main body axial end 34a facing away with respect to the second housing part 5 a support collar 36 protruding over an outer lateral surface 35 of the main body 39 and encircling the main body 39 in portions is provided. The support collars 36 of the insert sleeves 31 are configured so that a respective insert sleeve 31, in the state inserted into a through-bore 29, can touchingly support itself on the second housing part 5 by way of the support collar 36. In the inserted state, the support collars 36 are completely recessed into a through-bore 29. Because of these measures, the first and second attachment features 16, 17 do not protrude over the housing 3 or the first and second housing part 4, 5 but are quasi-countersunk or integrated. Because of this, the proposed drive device 1 or the housing 3 can be a relatively compact structure in the axial direction 8 of the axis of rotation 9.

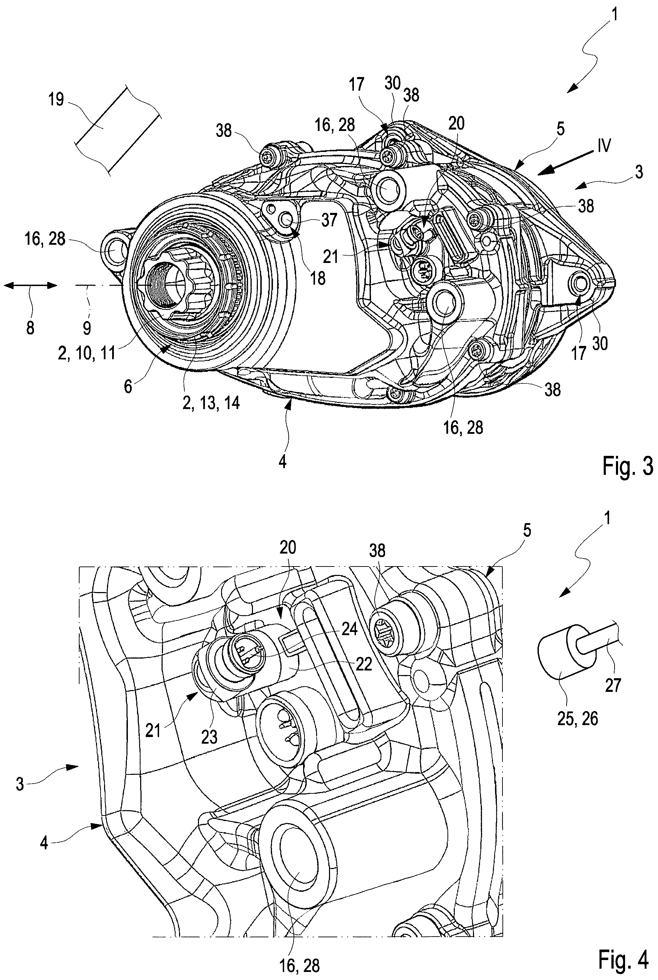

The drive device 1, furthermore, comprises a circuit board arranged in the housing 3 equipped with electronic components that are not visible, which is in particular a so-called PCB (printed circuit board). The same has a connection interface 20 penetrating the first housing part 4, which has at least one plug connector 21 protruding over the first housing part 4 for connecting a mating plug connector 26 of a sensor line 27 of the bicycle. In Fig. 3 and 4 it is noticeable that the plug connector 21 is embodied angled and forms a 90° angular plug connector. The plug connector 21 comprises a connector base 22 that is more or less parallel with respect to the axis of rotation 9 and directly acts on the connection interface 20, and a connector extension 23 following thereon. With respect to the connector base 22, the connector extension 23 is angled so that the connector extension 23 and the connector base 22 between them or the connector extension 23 and the axis of rotation 9 between them define an angle which exemplarily amounts to 90°.

According to the illustrated embodiment in Fig. 3 and 4 it is provided that the angular plug connector 21 comprises contact pins 24 and the mating plug connector 26 of the sensor line 27, complementary contact jacks 25, into which the contact pins 24 of the plug connector 21 can be plugged. By way of the angular plug connector 21, the said sensor line 27 can be run along the frame 19 of the bicycle and routed more or less at a right angle to the axis of rotation 9 towards the plug connector 21 of the drive device 1 and mounted thereon. The mating plug connector 26 of the sensor line 27 can be embodied as a cost-effective flat mating plug connector, since the plug connector 21 is already angled. Because of the angular plug connector 21 the drive device is a relatively compact construction in the axial direction 8 of the axis of rotation 9. It should be mentioned, furthermore, that the first housing part 4 has third attachment features 18 for fixing a chain guide of the drive device 1 which is not illustrated for guiding a chain of the drive device 1 engaging with the attachment part 15, see Fig. 3. These are realised by threaded blind hole bores and/or threaded through-bores 37 extending into the first housing part 4.

## Claims

1. A drive device (1) for a bicycle, in particular an E-bike or a Pedelec, comprising
- a multi-part housing (3) accommodating a drive unit (2) of the drive device (1), wherein the housing (3) comprises a first monolithic housing part (4) having a first opening (6) and a second monolithic housing part (5) fixed to the first housing part (4) and having a second opening (7) aligned in the axial direction (8) of an axis of rotation (9) of a drive shaft (10) of the drive unit (2) with the first opening (6),
- wherein the drive shaft (10) penetrates the first opening (6) and the second opening (7) forming shaft axial ends (11, 12) protruding over the first housing part (4) and second housing part (5) for arranging pedals of the drive unit (2),
- wherein the drive unit (2) comprises an output shaft (13), which penetrates the first opening (6) forming an axial protrusion (14) protruding over the first housing part (4) and enclosing the drive shaft (10) coaxially with respect to the axis of rotation (9) for arranging an attachment part (15),
- wherein the first housing part (4) comprises first attachment features (16) for fixing the drive device (1) to a frame (19) of the bicycle,
- wherein the second housing part (5) comprises second attachment features (17) for fixing the drive device (1) to the frame (19) of the bicycle,
- wherein the drive device (1) comprises a circuit board arranged in the housing (3) equipped with electronic components, which has a connection interface (20) penetrating the first housing part (4), **characterized in that** the connection interface has at least one angular plug connector (21) protruding over the first housing part (4) for connecting a mating plug connector (26) of a sensor line (27).

2. The drive device (1) according to Claim 1,
**characterised in that**
- the angular plug connector (21) has a connector base (22) that is parallel with respect to the axis of rotation (9) and engaging with the connection interface (20) and a connector extension (23) following thereon,
- wherein the connector extension (23) with respect to the connector base (22) is angled so that between the connector extension (23) and the axis of rotation (9) an angle is defined.

3. The drive device (1) according to Claim 2,
**characterised in that**
- the said angle substantially amounts to 90° or is 90°.

4. The drive device (1) according to any one of the preceding claims,
**characterised in that**
- the angular plug connector (21) forms a 90° angular plug connector.

5. The drive device (1) according to any one of the preceding claims,
**characterised in that**
- the angular plug connector (21) comprises contact pins (24) and the mating plug connector (26) of the sensor line (27) contact jacks, into which the contact pins (24) of the plug connector (21) can be plugged, or
- the mating plug connector (26) of the sensor line (27) comprises contact pins (24) and the angular plug connector (21) contact jacks, into which the contact pins (24) of the mating plug connector (26) can be plugged.

6. The drive device (1) according to any one of the preceding claims,
**characterised in that**
- the first attachment features (16) are realised by threaded blind hole bores and/or threaded through-bores (28) extending into the first housing part (4).

7. The drive device (1) according to any one of the preceding claims,
**characterised in that**
- the second attachment features (17) are realised by thread-free through-bores (29), which extend completely through shoulder projections (30) of the second housing part (5), and insert sleeves (31) with internal thread (32), which are each inserted into a corresponding one of said through-bores (29).

8. The drive device (1) according to any one of the preceding claims,
**characterised in that**
- the first housing part (4) has third attachment features (18) for fixing a chain guide of the drive device (1) for guiding a chain of the drive device (1) engaging with the attachment part (15),
- wherein the third attachment features (18) are realised by threaded blind hole bores and/or threaded through-bores (37) extending into the first housing part (4).

9. A bicycle, in particular an E-bike or a Pedelec, comprising a centre drive or bottom bracket drive comprising a drive device (1) according to any of the claims 1 to 8 which is arranged in the frame (19) of the bicycle in the region of the pedals of the bicycle.

## Patentansprüche

1. Antriebsvorrichtung (1) für ein Fahrrad, insbesondere ein E-Bike oder ein Pedelec, umfassend
- ein mehrteiliges Gehäuse (3), das eine Antriebseinheit (2) der Antriebsvorrichtung (1) beherbergt, wobei das Gehäuse (3) einen ersten monolithischen Gehäuseteil (4), der eine erste Öffnung (6) aufweist, und einen zweiten monolithischen Gehäuseteil (5) umfasst, der am ersten Gehäuseteil (4) befestigt ist und eine zweite Öffnung (7) aufweist, die in der axialen Richtung (8) einer Drehachse (9) einer Antriebswelle (10) der Antriebseinheit (2) mit der ersten Öffnung (6) fluchtet,
- wobei die Antriebswelle (10) durch die erste Öffnung (6) und die zweite Öffnung (7) tritt und axiale Wellenenden (11, 12), die über den ersten Gehäuseteil (4) und den zweiten Gehäuseteil (5) vorspringen, zum Anordnen von Pedalen der Antriebseinheit (2) bildet,
- wobei die Antriebseinheit (2) eine Abtriebswelle (13) umfasst, die durch die erste Öffnung (6) tritt und einen axialen Vorsprung (14), der über den ersten Gehäuseteil (4) vorspringt und die Antriebswelle (10) koaxial in Bezug auf die Drehachse (9) umschließt, zum Anordnen eines Anbringungsteils (15) bildet,
- wobei der erste Gehäuseteil (4) erste Anbringungsmerkmale (16) zum Befestigen der Antriebsvorrichtung (1) an einem Rahmen (19) des Fahrrads umfasst,
- wobei der zweite Gehäuseteil (5) zweite Anbringungsmerkmale (17) zum Befestigen der Antriebsvorrichtung (1) am Rahmen (19) des Fahrrads umfasst,
- wobei die Antriebsvorrichtung (1) eine im Gehäuse (3) angeordnete, mit elektronischen Komponenten bestückte Leiterplatte umfasst, die eine Verbindungsschnittstelle (20) aufweist, die durch den ersten Gehäuseteil (4) tritt,
**dadurch gekennzeichnet, dass** die Verbindungsschnittstelle mindestens einen Winkelsteckverbinder (21), der über den ersten Gehäuseteil (4) vorspringt, zum Verbinden eines Gegensteckverbinders (26) einer Sensorleitung (27) aufweist.

2. Antriebsvorrichtung (1) nach Anspruch 1,
**dadurch gekennzeichnet, dass**
- der Winkelsteckverbinder (21) eine Verbinderbasis (22), die in Bezug auf die Drehachse (9) parallel ist und mit der Verbindungsschnittstelle (20) ineinandergreift, und eine darauf folgende Verbinderverlängerung (23) aufweist,
- wobei die Verbinderverlängerung (23) in Bezug auf die Verbinderbasis (22) so abgewinkelt ist, dass zwischen der Verbinderverlängerung (23) und der Drehachse (9) ein Winkel definiert ist.

3. Antriebsvorrichtung (1) nach Anspruch 2,
**dadurch gekennzeichnet, dass**
- der Winkel sich im Wesentlichen auf 90° beläuft oder 90° beträgt.

4. Antriebsvorrichtung (1) nach einem der vorstehenden Ansprüche,
**dadurch gekennzeichnet, dass**
- der Winkelsteckverbinder (21) einen 90°-Winkelsteckverbinder bildet.

5. Antriebsvorrichtung (1) nach einem der vorstehenden Ansprüche,
**dadurch gekennzeichnet, dass**
- der Winkelsteckverbinder (21) Kontaktstifte (24) umfasst und der Gegensteckverbinder (26) der Sensorleitung (27) Kontaktbuchsen, in die die Kontaktstifte (24) des Steckverbinders (21) eingesteckt werden können, oder
- der Gegensteckverbinder (26) der Sensorleitung (27) Kontaktstifte (24) umfasst und der Winkelsteckverbinder (21) Kontaktbuchsen, in die die Kontaktstifte (24) des Gegensteckverbinders (26) eingesteckt werden können.

6. Antriebsvorrichtung (1) nach einem der vorstehenden Ansprüche,
**dadurch gekennzeichnet, dass**
- die ersten Anbringungsmerkmale (16) durch Gewindesacklochbohrungen und/oder Gewindedurchgangsbohrungen (28) ausgeführt sind, die sich in den ersten Gehäuseteil (4) erstrecken.

7. Antriebsvorrichtung (1) nach einem der vorstehenden Ansprüche,
**dadurch gekennzeichnet, dass**
- die zweiten Anbringungsmerkmale (17) durch gewindefreie Durchgangsbohrungen (29), die sich vollständig durch Schultervorsprünge (30) des zweiten Gehäuseteils (5) erstrecken, und Einsatzhülsen (31) mit Innengewinde (32), die jeweils in eine entsprechende der Durchgangsbohrungen (29) eingefügt sind, ausgeführt sind.

8. Antriebsvorrichtung (1) nach einem der vorstehenden Ansprüche,
**dadurch gekennzeichnet, dass**
- der erste Gehäuseteil (4) dritte Anbringungsmerkmale (18) zum Befestigen einer Kettenführung der Antriebsvorrichtung (1) zum Führen einer Kette der Antriebsvorrichtung (1), die mit dem Anbringungsteil (15) ineinandergreift, aufweist,
- wobei die dritten Anbringungsmerkmale (18) durch Gewindesacklochbohrungen und/oder Gewindedurchgangsbohrungen (37) ausgeführt sind, die sich in den ersten Gehäuseteil (4) erstrecken.

9. Fahrrad, insbesondere E-Bike oder Pedelec, das einen Mittenantrieb oder Tretlagerantrieb umfasst, der eine Antriebsvorrichtung (1) nach einem der Ansprüche 1 bis 8 umfasst, die im Rahmen (19) des Fahrrads im Bereich der Pedale des Fahrrads angeordnet ist.

## Revendications

1. Dispositif d'entraînement (1) pour un vélo, en particulier un vélo électrique ou un speed bike, comprenant
- un boîtier (3) en plusieurs parties logeant une unité d'entraînement (2) du dispositif d'entraînement (1), dans lequel le boîtier (3) comprend une première partie formant boîtier monolithique (4) présentant une première ouverture (6) et une seconde partie formant boîtier monolithique (5) fixée à la première partie formant boîtier (4) et présentant une seconde ouverture (7) alignée dans la direction axiale (8) d'un axe de rotation (9) d'un arbre d'entraînement (10) de l'unité d'entraînement (2) sur la première ouverture (6),
- dans lequel l'arbre d'entraînement (10) pénètre dans la première ouverture (6) et la seconde ouverture (7) en formant des extrémités axiales d'arbre (11, 12) faisant saillie au-dessus de la première partie formant boîtier (4) et de la seconde partie formant boîtier (5) pour agencer des pédales de l'unité d'entraînement (2),
- dans lequel l'unité d'entraînement (2) comprend un arbre de sortie (13), qui pénètre dans la première ouverture (6) en formant une saillie axiale (14) faisant saillie au-dessus de la première partie formant boîtier (4) et renfermant l'arbre d'entraînement (10) coaxialement par rapport à l'axe de rotation (9) pour agencer une partie de fixation (15),
- dans lequel la première partie formant boîtier (4) comprend des premiers éléments de fixation (16) pour fixer le dispositif d'entraînement (1) à un cadre (19) du vélo,
- dans lequel la seconde partie formant boîtier (5) comprend des deuxièmes éléments de fixation (17) pour fixer le dispositif d'entraînement (1) au cadre (19) du vélo,
- dans lequel le dispositif d'entraînement (1) comprend une carte de circuit imprimé agencée dans le boîtier (3) équipée de composants électroniques, qui présente une interface de connexion (20) pénétrant dans la première partie formant boîtier (4),
**caractérisé en ce que** l'interface de connexion présente au moins un connecteur enfichable angulaire (21) faisant saillie au-dessus de la première partie formant boîtier (4) pour connecter un connecteur enfichable d'appariement (26) d'une ligne de capteur (27).

2. Dispositif d'entraînement (1) selon la revendication 1,
**caractérisé en ce que**
- le connecteur enfichable angulaire (21) présente une base de connecteur (22) qui est parallèle à l'axe de rotation (9) et venant en prise avec l'interface de connexion (20) et une extension de connecteur (23) à la suite de celui-ci,
- dans lequel l'extension de connecteur (23) est inclinée par rapport à la base de connecteur (22) de telle sorte qu'un angle soit défini entre l'extension de connecteur (23) et l'axe de rotation (9).

3. Dispositif d'entraînement (1) selon la revendication 2,
**caractérisé en ce que**
- ledit angle équivaut sensiblement à 90° ou est de 90°.

4. Dispositif d'entraînement (1) selon l'une quelconque des revendications précédentes,
**caractérisé en ce que**
- le connecteur enfichable angulaire (21) forme un connecteur enfichable angulaire à 90°.

5. Dispositif d'entraînement (1) selon l'une quelconque des revendications précédentes,
**caractérisé en ce que**
- le connecteur enfichable angulaire (21) comprend des broches de contact (24) et le connecteur enfichable d'appariement (26) de la ligne de capteur (27) des prises de contact, dans lesquelles les broches de contact (24) du connecteur (21) peuvent être enfichées, ou
- le connecteur enfichable d'appariement (26) de la ligne de capteur (27) comprend des broches de contact (24) et le connecteur enfichable angulaire (21) des prises de contact, dans lesquelles les broches de contact (24) du connecteur enfichable d'appariement (26) peuvent être enfichées.

6. Dispositif d'entraînement (1) selon l'une quelconque des revendications précédentes,
**caractérisé en ce que**
- les premiers éléments de fixation (16) sont réalisés par des alésages borgnes filetés et/ou des alésages traversants filetés (28) s'étendant dans la première partie formant boîtier (4).

7. Dispositif d'entraînement (1) selon l'une quelconque des revendications précédentes,
**caractérisé en ce que**
- les deuxièmes éléments de fixation (17) sont réalisés par des alésages traversants sans filetage (29), qui s'étendent entièrement à travers des saillies en épaulement (30) de la seconde partie formant boîtier (5), et des manchons d'insertion (31) avec filetage intérieur (32), qui sont insérés chacun dans un alésage traversant correspondant desdits alésages traversants (29).

8. Dispositif d'entraînement (1) selon l'une quelconque des revendications précédentes,
**caractérisé en ce que**
- la première partie formant boîtier (4) présente des troisièmes éléments de fixation (18) pour fixer un guide-chaîne du dispositif d'entraînement (1) afin de guider une chaîne du dispositif d'entraînement (1) venant en prise avec la partie de fixation (15),
- dans lequel les troisièmes éléments de fixation (18) sont réalisés par des alésages borgnes filetés et/ou des alésages traversants filetés (37) s'étendant dans la première partie formant boîtier (4).

9. Vélo, en particulier un vélo électrique ou un speed bike, comprenant un entraînement central ou un entraînement de pédalier comprenant un dispositif d'entraînement (1) selon l'une quelconque des revendications 1 à 8 qui est agencé dans le cadre (19) du vélo dans la région des pédales du vélo.
